# EUROPÄISCHE PATENTSCHRIFT

(11) **EP 2 467 523 B1**
(45) Veröffentlichungstag und Bekanntmachung des Hinweises auf die Patenterteilung: **31.07.2013**
(21) Anmeldenummer: 10749750.5
(22) Anmeldetag: 12.08.2010
(51) Int. Cl.: D04H 13/00, B32B 5/06, B32B 5/26, A62D 5/00, D04H 1/56

(54) **FASER- UND FORMTEIL**
FIBROUS PART AND MOLDED PART
NAPPE DE FIBRES ET PIÈCE MOULÉE

(30) Priorität: 20.08.2009 AT 13142009
(43) Veröffentlichungstag der Anmeldung: 27.06.2012
(73) Patentinhaber: Helfenberger Immobilien LLC & Co Textilforschungs- Und Entwicklungs KG, 4184 Helfenberg (AT)
(72) Erfinder: GLASER, Josef, A-4184 Helfenberg (AT)
(74) Vertreter: Beer & Partner Patentanwälte KG
(86) Internationale Anmeldenummer: PCT/AT2010/000298
(87) Internationale Veröffentlichungsnummer: WO 2011/020131

(56) Entgegenhaltungen:
- WO-A1-2007/124521
- US-A- 4 433 024
- US-A- 4 726 978
- US-A- 4 868 032
- US-A- 4 948 639
- US-A1- 2003 236 047
- US-A1- 2004 092 188

## Beschreibung

Die Erfindung betrifft ein Verfahren zum Herstellen einer Textilware oder eines Formteiles aus einem mit Aktivkohle modifizierten Vlies, wobei das Vlies auf ein elastisches oder unelastisches Textüflächengebilde aufgenadelt wird.

Des Weiteren betrifft die Erfindung eine Textilware.

Darüber hinaus betrifft die Erfindung ein Formteil.

Derartige Verfahren bzw. Textilwaren bzw. Formteile sind aus der US 4 868 032 A, der US 4 726 978 A und der WO 2007/124 521 bekannt.

Im Gegensatz zu Webwaren (Gewebe) und Maschenwaren (z.B. Gewirk oder Gestrick), die aus Garnen hergestellt sind, ist ein Vlies ein textiles Flächengebilde aus einzelnen, lose zusammenliegenden Fasern bzw. Filamenten. Die Festigkeit eines Vlieses beruht im Wesentlichen auf der fasereigenen Haftung, weshalb ein Vlies schnell reißt, wenn es gestreckt wird.

Es ist bekannt, Vliese aus Fasern, bei denen zumindest die Oberflächenschicht Aktivkohle aufweist, auf Grund der Adsorptionseigenschaft der Aktivkohle als Schutztextilien zu verwenden. Solche Fasern weisen einen Aktivkohleanteil von ca. 30 bis 50 % auf. Nachteilig dabei ist, dass ein derartiger Anteil an Aktivkohle die Reißfestigkeit eines Vlieses weiter verringert. Senkt man den Aktivkohlegehalt (z.B. auf ca. 20 % oder weniger), so wird die Reißfestigkeit des Vlieses zwar nicht weiter verringert, jedoch gehen die Adsorptionseigenschaften der Aktivkohle derart verloren, dass das Vlies für Schutztextilien nicht mehr brauchbar ist.

Aus dem Stand der Technik ist weiters bekannt, dass Vliese aus sehr feinen Fasern als Filtermaterialien (Luft-, Flüssig-, Partikelfiltration) mit anderen Vliesen kombiniert werden, um die Festigkeit zu erhöhen. Somit wird erreicht, dass die Dicke der Filterschicht aus Vlies erhöht wird, so dass die beim Filtrieren im Wesentlichen senkrecht auf die Vliesschicht wirkenden Kräfte die Filterschicht nicht so schnell durchbrechen. Solche permanent im Wesentlichen senkrecht auf die Vliesschicht wirkenden Kräfte sind jedoch nicht mit einem Strecken der Vliesschicht, bei dem Kräfte in jeder möglichen Richtung auf das Vlies ausgeübt werden, vergleichbar. Bei einem Strecken der so kombinierten Vliesschicht treten weiterhin die eingangs genannten Nachteile hinsichtlich Reißfestigkeit auf. Zudem ist es in Einsatzgebieten der Erfindung (z.B. Schutzbekleidung, wie Schutzhandschuh) wichtig, dass die Schichtdicke des Vlieses nicht sonderlich erhöht wird, da sonst die Bewegungsfreiheit einer die erfindungsgemäße Textilware tragenden Person eingeschränkt wird, was ein bedeutendes Sicherheitsrisiko darstellt.

Der Erfindung liegt die Aufgabe zu Grunde, ein Verfahren der eingangs genannten Gattung sowie eine Textilware und ein Formteil zur Verfügung zu stetlen, mit welchen die Nachteile des Standes der Technik weitestgehend vermieden werden.

Gelöst wird diese Aufgabe erfindungsgemäß mit einem Verfahren, welches die Merkmale des Anspruches 1 aufweist.

Was die Textilware anbelangt, so wird diese Aufgabe mit einer Textilware mit den Merkmalen des Anspruches 8 gelöst.

Was das Formteil anbelangt, so wird diese Aufgabe mit einem Formteil mit den Merkmalen des Anspruches 9 gelöst.

Bevorzugte und vorteilhafte Ausführungsformen der Erfindung sind Gegenstand der Unteransprüche.

Ein mit Aktivkohle modifiziertes Vlies wird auf ein elastisches oder unelastisches Textilflächengebilde, vorzugsweise eine Webware oder eine Maschenware, aufgenadelt. Erfindungsgemäß ist vorgesehen, dass zum Herstellen des Vlieses eine Spinnlösung mit einer Aktivkohle-Konzentration von 30 % bis 50 % bezogen auf Cellulose verwendet wird. Mit diesem Verfahren wird erreicht, dass einem sonst nicht reißfesten Vlies die Festigkeit des Textilflächengebildes, insbesondere der Web- oder Maschenware, verliehen werden kann, wobei die Schichtdicke der Textilware gering bleibt und die bei Schutztextilien notwendigen Adsorptionseigenschaften der Aktivkohle vollständig erhalten bleiben.

Im Rahmen der Erfindung kann das mit Aktivkohle modifizierte Vlies wie folgt hergestellt werden:

Am Beispiel eines Lyocellverfahrens (N-Methylmorpholine N-oxide, NMMNO) wird zur Herstellung einer Vliesfaser der gelösten Cellulose etwa 30 bis 50% Aktivkohle beigemengt. Auch bekannte Nassspinnverfahren können im Rahmen der Erfindung angewandt werden, in dem beispielsweise dem Spinnbad Aktivkohle beigemengt wird. Im folgenden wird auf die Bildung von Cellulose-Spinnvliesstoffen nach dem MeltBlown-Verfahren eingegangen.

Der MeltBlown-Prozess erlaubt es prinzipiell, mit ökonomischen Parametern ein Vlies aus Feinstfasern herzustellen, weshalb die so hergestellten Vliese auf Grund ihrer möglichst geringen Schichtdicke für Schutztextilien besonders von Interesse sind. Jedoch ist der eingangs angesprochene Nachteil der geringen Reißfestigkeit wegen der besonders feinen Fasern bei MeltBlown-Vliesen besonders ausgeprägt.

Die Aktivkohle aufweisende Cellulose/NMMO-Spinnlösung gelangt über eine Spinnpumpe in eine Spinndüse, die über die gesamte Spinnbreite gleichmäßig verteilte Düsenbohrungen aufweist. Die Spinniösung wird durch die Düse gepresst und zu Cellulose-Extrudat-Strängen verformt, welche bei dem Meltblown-Verfahren durch relativ kalte Blasluft erfasst, gestreckt und zu endlichen Fasern verzogen werden. Ein direkt unter der Spinndüse stattfindendes Besprühen der Fasern mit Wasser und/oder Luft bewirkt das Koagulieren des gebildeten Cellulose/NMMO-Lösungsstrahles. Die entstehenden Cellulose-Fasern werden anschließend wirr zu einem Vlies abgelegt, durch Auswaschen von Lösungsmitteln befreit und zu einem Cellulose-Spinnvliesstoff verfestigt und getrocknet.

Zum Aufnadeln wird das mit Aktivkohle modifizierte Vlies auf dem textilen Flächengebilde angeordnet. Anschließend werden Vlies und Textilflächengebilde zwischen einer Grund- und einer (optionalen) Niederhalterplatte angeordnet und einer Nadelvorrichtung zugeführt. Grund- und Niederhalterplatte sind als Lochplatten ausgebildet, wobei die Anordnung der Löcher mit der Anordnung der Nadeln in der Nadelvorrichtung korrespondiert.

Beim Eindringen (bzw. Durchstoßen) der Nadeln in das Vlies und das textile Flächengebilde wird ein Teil der Fasern oder Filamente des Vlieses in Form von Faserschlingen in eine zum Textilflächengebilde senkrechte Ebene umorientiert. Die Spitzen dieser Faserschlingen dringen in das textile Flächengebilde ein oder durchstoßen das textile Flächengebilde und bleiben auch nach dem Herausziehen der Nadeln außerhalb des Vlieses.

Vorzugsweise werden zum Aufnadeln des Vlieses auf das textile Flächengebilde mit Kerben versehene Nadeln verwendet.

In einer besonders bevorzugten Ausführungsform der Erfindung ist vorgesehen, dass das elastische oder unelastische Textilflächengebilde während dem Aufnadeln gestreckt oder gestreckt gehalten wird und dass nach dem Aufnadeln entspannt wird. Der Effekt, der somit erzielt wird ist, dass das Vlies nicht reißt, wenn die Textilware bzw. das Formteil erneut gestreckt wird, da das Vlies dann aus einem gestauchten Ausgangszustand heraus gestreckt wird.

Nachdem ein Gewebe (Webware) im Vergleich zu einem Gestrick oder Gewirk (Maschenware) eine geringere Elastizität besitzt, wird das Strecken während dem Vernadeln vorzugsweise bei einer Maschenware durchgeführt.

Weitere Einzelheiten, Merkmale und Vorteile der Erfindung ergeben sich aus der nachstehenden Beschreibung unter Bezugnahme auf die angeschlossene Zeichnung, in welcher eine bevorzugte Ausführungsform dargestellt ist.

Ein aus einer Spinnlösung mit einer Aktivkohle-Konzentration von 30 % bis 50 % bezogen auf Cellulose hergestelltes Vlies 1 wird zum Herstellen einer Textilware oder eines Formteiles auf ein elastisches oder unelastisches Textilflächengebilde 2 aufgelegt. Vlies 1 und Textilflächengebilde 2 werden zwischen einer Grundplatte 3 und einer Niederhalterplatte 4 angeordnet und einer Nadelvorrichtung 5 zugeführt. In der Nadelvorrichtung 5 führen Nadeln 6 eine senkrechte Ab- und Aufwärtsbewegung durch. Die Grundplatte 3 und die Niederhalterplatte 4 weisen Löcher 7, 8 auf, durch welche die Nadeln 8 der Nadelvorrichtung 5 beim Aufnadeln durchtreten. Bei der Abwärtsbewegung der Nadeln 8 werden das Vlies 1 und das Textilflächengebilde 2 gegen die Grundplatte 3 gedrückt. Bei der Aufwärtsbewegung der Nadeln 8 werden das Vlies 1 und das Textilflächengebilde 2 durch die Niederhalterplatte 4 in ihrer Lage gehalten. Durch Höher- oder Tieferstellen der Grundplatte 3 kann die Einstichtiefe der Nadeln 8 in das Vlies 1 und das Textilflächengebilde 2 variiert werden.

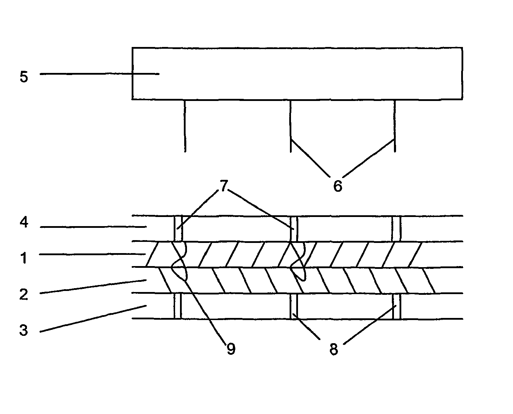

In dem in der Figur dargestellten Ausführungsbeispiel sind durch das Aufnadeln Faserschlingen 9 aus Fasern des Vlieses 1 gebildet, wobei die Faserschlingen 9 nach der Aufwärtsbewegung der Nadeln 6 innerhalb des Textilflächengebildes 2 angeordnet bleiben.

Während dem Aufnadeln wird das Textilflächengebilde 2 gestreckt. Das Textilflächengebilde 2 kann auch vor dem Aufnadeln gestreckt werden, wobei es während dem Aufnadeln im gestreckten Zustand gehalten wird. Nach dem Aufnadeln wird das Textilflächengebilde 2 bzw. die hergestellte Textilware oder das Formteil entspannt.

Die so hergestellte Textilware bzw. das Formteil ist streckbar, wobei dass das Vlies (1) im ungestreckten Zustand der Textilware bzw. des Formteils in einem gestauchten Zustand auf dem elastischen oder unelastischen Textilflächengebilde (2) aufgenadelt ist.

## Patentansprüche

1. Verfahren zum Herstellen einer Textilware oder eines Formteiles aus einem mit Aktivkohle modifizierten Vlies (1), wobei das Vlies (1) auf ein elastisches oder unelastisches Textilflächengebilde (2) aufgenadelt wird, **dadurch gekennzeichnet, dass** zum Herstellen des Vlieses (1) eine Spinnlösung mit einer Aktivkohle-Konzentration von 30 % bis 50% bezogen auf Cellulose verwendet wird.

2. Verfahren nach Anspruch 1, **dadurch gekennzeichnet, dass** als elastisches oder unelastisches Textilflächengebilde (2) eine Webware oder eine Maschenware verwendet wird.

3. Verfahren nach Anspruch 1 oder 2, **dadurch gekennzeichnet, dass** als Vlies (1) ein mit Aktivkohle modifiziertes Cellulose-Spinnvlies verwendet wird.

4. Verfahren nach Anspruch 3, **dadurch gekennzeichnet, dass** zum Herstellen des Vlieses (1) eine Spinnlösung mit einer Cellulose-Konzentration von 6 % verwendet wird.

5. Verfahren nach einem der Ansprüche 1 bis 4, **dadurch gekennzeichnet, dass** das Vlies (1) durch ein MeltBlown-Verfahren hergestellt wird.

6. Verfahren nach einem der Ansprüche 2 bis 5, **dadurch gekennzeichnet, dass** als Maschenware ein Gestrick oder ein Gewirk verwendet wird.

7. Verfahren nach einem der Ansprüche 1 bis 6, **dadurch gekennzeichnet, dass** das elastische oder unelastische Textilflächengebilde (2) während dem Aufnadeln gestreckt oder gestreckt gehalten wird und nach dem Aufnadeln entspannt wird.

8. Textilware mit einem mit Aktivkohle modifizierten Vlies (1), wobei das Vlies (1) auf einem elastischen oder unelastischen Textilflächengebilde (2) aufgenadelt ist, **dadurch gekennzeichnet, dass** das Vlies (1) aus einer Spinnlösung mit einer Aktivkohle-Konzentration von 30 % bis 50 % bezogen auf Cellulose hergestellt ist.

9. Formteil mit einem mit Aktivkohle modifizierten Vlies (1), wobei das Vlies (1) auf einem elastischen oder unelastischen Textilflächengebilde (2) aufgenadelt ist, **dadurch gekennzeichnet, dass** das Vlies (1) aus einer Spinnlösung mit einer Aktivkohle-Konzentration von 30 % bis 50 % bezogen auf Cellulose hergestellt ist.

10. Textilware bzw. Formteil nach Anspruch 8 bzw. 9, **dadurch gekennzeichnet, dass** das elastische oder unelastische Textilflächengebilde (2) eine Webware oder eine Maschenware ist.

11. Textilware bzw. Formteil nach einem der Ansprüche 8 bis 10, **dadurch gekennzeichnet, dass** das die Textilware bzw. das Formteil streckbar ist und dass das Vlies (1) im ungestreckten Zustand der Textilware bzw. des Formteils in einem gestauchten Zustand auf dem elastischen oder unelastischen Textilflächengebilde (2) aufgenadelt ist.

## Claims

1. Method for producing a textile good or a molded part from a non-woven fabrik (1) that is modified with activated carbon, wherein the non-woven fabric (1) is needled on an elastic or inelastic textile sheet material (2), **characterized in that** a spinning solution with an activated carbon concentration of 30 % to 50 % relative to cellulose is used for producing the non-woven fabric (1).

2. Method according to claim 1, wherein a woven fabric or a knitted fabric is used as an elastic or inelastic textile sheet material (2).

3. Method according to claim 1 or 2, wherein a cellulose-spunbonded non-woven fabric that is modified with activated carbon is used as non-woven fabric (1).

4. Method according to claim 3, wherein a spinning solution with a cellulose concentration of 6 % is used for producing the non-woven fabric (1).

5. Method according to one of claims 1 to 4, wherein the non-woven fabric (1) os produced by a meltblown method.

6. Method according to one of claims 2 to 5, wherein a mesh or a knit fabric is used as knitted fabric.

7. Method according to one of claims 1 to 6, wherein the elastic or inelastic textile sheet material (2) is stretched or kept stretched during needling, and stress is relieved after needling.

8. Textile good with a non-woven fabric (1) that is modified with activated carbon and that is needled on an elastic or inelastic textile sheet material (2), **characterized in that** the non-woven fabric (1) is made of a spinning solution with an activated carbon concentration of 30 % to 50 % relative to cellulose.

9. Molded part with a non-woven fabric (1) that is modified with activated carbon and that is needled on an elastic or inelastic textile sheet material (2), **characterized in that** the non-woven fabric (1) is made of a spinning solution with an activated carbon concentration of 30 % to 50 % relative to cellulose.

10. Textile good or molded part according to claim 8 or 9, wherein the elastic or inelastic textile sheet material (2) is a woven fabric or a knitted fabric.

11. Textile good or molded part according to one of the claims 8 to 10, wherein the textile good or the molded part can be stretched and wherein the non-woven fabric (1) in the unstretched state of the textile good or the molded part in a compressed state is needled on the elastic of inelastic sheet material (2).

## Revendications

1. Procédé de fabrication d'un article textile ou d'une pièce moulée à partir d'un non-tissé (1) modifié au charbon actif, le non-tissé (1) étant aiguilleté sur un tissu élastique ou non élastique (2), **caractérisé en ce que**, pour fabriquer le non-tissé (1), on utilise une solution de filage ayant une concentration en charbon actif de 30 % à 50 % par rapport à la cellulose.

2. Procédé selon la revendication 1, **caractérisé en ce qu'**on utilise comme tissu élastique ou non élastique (2) un tissage ou une maille.

3. Procédé selon la revendication 1 ou 2, **caractérisé en ce qu'**on utilise comme non-tissé (1) un non-tissé cellulosique modifié au charbon actif.

4. Procédé selon la revendication 3, **caractérisé en ce que**, pour fabriquer le non-tissé (1), on utilise une solution de filage ayant une concentration en cellulose de 6 %.

5. Procédé selon une des revendications 1 à 4, **caractérisé en ce que** le non-tissé (1) est fabriqué par procédé de soufflage en fusion.

6. Procédé selon la revendication 2 à 5, **caractérisé en ce qu'**on utilise comme maille un tricot ou un textile de bonneterie.

7. Procédé selon une des revendications 1 à 6, **caractérisé en ce que** le tissu élastique ou non élastique (2) est étiré ou maintenu étiré pendant l'aiguilletage et détendu après l'aiguilletage.

8. Article textile contenant un non-tissé modifié au charbon actif (1), dans lequel le non-tissé (1) est aiguilleté sur un tissu élastique ou non élastique (2), **caractérisé en ce que** le non-tissé (1) est fabriqué à partir d'une solution de filage ayant une concentration en charbon actif de 30 % à 50 % par rapport à la cellulose.

9. Pièce moulée contenant un non-tissé modifié au charbon actif (1), dans lequel le non-tissé (1) est aiguilleté sur un tissu élastique ou non élastique (2), **caractérisé en ce que** le non-tissé (1) est fabriqué à partir d'une solution de filage ayant une concentration en charbon actif de 30 % à 50 % par rapport à la cellulose.

10. Article textile ou pièce moulée selon la revendication 8 ou 9, **caractérisé en ce que** le tissu élastique ou non élastique (2) est un tissage ou une maille.

11. Article textile ou pièce moulée selon une des revendications 8 à 10, **caractérisé en ce que** le tissu élastique ou non élastique (2) est étirable et que le non-tissé (1), en état non étiré de l'article textile ou de la pièce moulée, est aiguilleté en état aplati sur le tissu élastique ou non élastique (2).
